# EUROPEAN PATENT APPLICATION

(11) **EP 4 628 721 A1**
(43) Date of publication of application: **08.10.2025**
(21) Application number: 25158954.5
(22) Date of filing: 19.02.2025
(51) Int. Cl.: F02D 19/06, F02D 35/02, F02D 41/00, F02M 21/02

(54) **ENGINE DEVICE**

(30) Priority: 18.03.2024 JP 2024042192; 11.12.2024 JP 2024216239
(71) Applicant: Yanmar Holdings Co., Ltd., Osaka-shi, Osaka (JP)
(72) Inventor: MATSUNAGA, Daichi, Osaka (JP); TENTORA, Takafumi, Osaka (JP); TOSHINAGA, Kazuteru, Osaka (JP)
(74) Representative: Novagraaf International SA

(57) **Abstract**

[Problem] Provided is an engine device which improves ability to ignite an air-fuel mixture containing ammonia and hydrogen and its slow combustion speed, and which can stably combust the air-fuel mixture with good exhaust gas properties.

[Solution] An engine device 1 which is an ammonia mixed combustion engine device operated by the air-fuel mixture of at least ammonia and hydrogen being combusted in a combustion chamber 21a, supplies ammonia and hydrogen to the combustion chamber 21a to create the air-fuel mixture, compresses the air-fuel mixture in the combustion chamber 21a to raise the temperature and pressure of the air-fuel mixture, and in accordance with a state of the air-fuel mixture in the combustion chamber 21a, ignites the air-fuel mixture in the combustion chamber 21a by an ignition device composed of an auxiliary fuel supply device 6 and an auxiliary fuel injection part 26.

## Description

### TECHNICAL FIELD

The present invention relates to an engine device which is operated by an air-fuel mixture containing at least ammonia and hydrogen being combusted in a combustion chamber.

### BACKGROUND ART

Conventionally, in engine devices, there is an engine device which is an ammonia mixed combustion engine operated by an air-fuel mixture containing ammonia and hydrogen being combusted in a combustion chamber. It is required for the engine device to improve properties of an exhaust gas exhausted from the ammonia mixed combustion engine.

For example, an ammonia mixed combustion engine disclosed in Patent Document 1 comprises a combustion chamber, an ammonia supply means of supplying ammonia to the combustion chamber, an air supply means of supplying air to the combustion chamber, a liquid fuel supply means of supplying a liquid fuel to the combustion chamber, a fuel ratio setting means of setting the ratio of the amount of supplied ammonia to the total amount of supplied liquid fuel and ammonia, and a supply timing control means of controlling the timing of supplying the liquid fuel by the liquid fuel supply means in accordance with the set ratio by the fuel ratio setting means. While the ammonia mixed combustion engine controls the timing of supplying the liquid fuel to the combustion chamber to be slower than the timing to start supplying ammonia and air, it controls, by the supply timing control means, the timing of supplying the liquid fuel to be earlier as the ratio of the amount of supplied ammonia set by the fuel ratio setting means is increased.

According to Patent Document 1, the supply timing control means controls the supply of liquid fuel by the fuel supply means by injecting it in multiple stages. In the ammonia mixed combustion engine, an advance angle as the timing of supplying the liquid fuel is set in a range between -25° and -70° with respect to the top dead center (TDC) of the engine. The ratio of the amount of supplied ammonia to the total amount of supplied liquid fuel and ammonia is in a range from 1% or more to 95% or less.

In addition, in a control device of an internal combustion engine disclosed in Patent Document 2, ammonia and a non-ammonia fuel which combusts easier than ammonia can be supplied as a fuel; and in order to start combusting an air-fuel mixture in a combustion chamber, the non-ammonia fuel is directly injected to the combustion chamber by a non-ammonia fuel injection device to ignite the injected non-ammonia fuel. When the proportion of ammonia occupied in a total fuel supplied to the internal combustion engine is higher, the control device is set to advance the timing of injecting the non-ammonia fuel as compared to when that is lower. Alternatively, when the proportion of ammonia occupied in a total fuel supplied to the internal combustion engine is higher, the control device is set to increase the injection frequency as compared to when that is lower.

### PRIOR ART DOCUMENT

### PATENT DOCUMENT

Patent Document 1: Japanese Patent Laid-Open No. 2022-155927
Patent Document 2: Japanese Patent No. 5397541

### SUMMARY OF INVENTION

### TECHNICAL PROBLEM

In an ammonia mixed combustion engine, as the amount of supplied ammonia is increased and the mixed combustion ratio is increased from 0 to 95%, the combustion stability may be lowered and the exhaust gas properties may be deteriorated, resulting in an increase in NH₃ and N₂O contained in the exhaust gas. In the conventional ammonia mixed combustion engine as disclosed in Patent Document 1, it aims at improving the exhaust gas properties by controlling the timing of supplying the liquid fuel to the combustion chamber; however, it is difficult to fulfill both an increase in the mixed combustion ratio and an improvement in the combustion stability and the exhaust gas properties only by controlling the timing of supplying the liquid fuel.

Further, in the conventional ammonia mixed combustion engine as disclosed in Patent Document 2, in order to properly combust the air-fuel mixture in the combustion chamber, the timing of injecting the non-ammonia fuel is advanced and the injection frequency is increased so that ability to ignite the non-ammonia fuel is enhanced. However, for the ammonia mixed combustion engine, ability to ignite the air-fuel mixture containing ammonia is enhanced by mixing a non-ammonia fuel such as hydrogen, but when hydrogen is mixed excessively, ability to ignite the air-fuel mixture containing ammonia is increased more than necessary, resulting in the occurrence of abnormal combustion such as premature ignition and making stable operation difficult. Because of this, for the conventional ammonia mixed combustion engines, it is difficult to stably combust the air-fuel mixture of ammonia and hydrogen with good exhaust gas properties.

The present invention aims at providing an engine device which improves ability to ignite an air-fuel mixture containing ammonia and hydrogen and its slow combustion speed, and which can stably combust the air-fuel mixture with good exhaust gas properties.

### SOLUTION TO PROBLEM

In order to solve the above problems, an engine device of the present invention is an engine device of an ammonia mixed combustion engine operated by an air-fuel mixture of at least ammonia and hydrogen being combusted in a combustion chamber, wherein the ammonia and the hydrogen are supplied to the combustion chamber to create the air-fuel mixture, the air-fuel mixture is compressed in the combustion chamber to raise the temperature and pressure of the air-fuel mixture, and in accordance with a state of the air-fuel mixture in the combustion chamber, the air-fuel mixture in the combustion chamber is ignited by an ignition device.

### ADVANTAGEOUS EFFECTS OF INVENTION

According to the present invention, provided is an engine device which improves ability to ignite an air-fuel mixture containing ammonia and hydrogen and its slow combustion speed, and which can stably combust the air-fuel mixture with good exhaust gas properties.

### BRIEF DESCRIPTION OF DRAWINGS

FIG. 1 is a schematic view illustrating an engine device according to an embodiment of the present invention.
FIG. 2 is a schematic view illustrating an ammonia mixed combustion engine in the engine device according to the embodiment of the present invention.
FIG. 3 is a graph illustrating on a map the amount of nitrogen oxides in the exhaust gas with respect to the relationship between the hydrogen mixed ratio and the air excess ratio of the main fuel in the ammonia mixed combustion engine.
FIG. 4 is a graph illustrating on a map the ignition timing to stably combust the air-fuel mixture with respect to the relationship between the hydrogen mixed ratio and the air excess ratio of the main fuel in the ammonia mixed combustion engine.
FIG. 5 is a graph illustrating the relationship between the hydrogen mixed ratio of the main fuel in the ammonia mixed combustion engine and the proportion of unburned ammonia contained in the exhaust gas being exhausted.
FIG. 6 is a graph illustrating the relationship between the hydrogen mixed ratio of the main fuel in the ammonia mixed combustion engine and the amount of nitrogen oxides contained in the exhaust gas.
FIG. 7 is a schematic view illustrating the engine device according to another example of the present invention.

### DESCRIPTION OF EMBODIMENTS

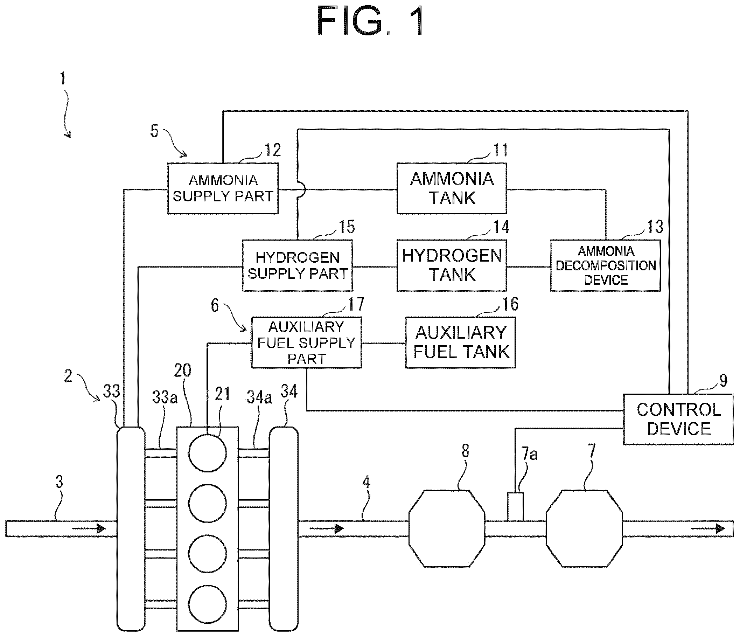

An engine device 1 of an embodiment of the present invention will be explained with reference to the drawings. As shown in FIG. 1, the engine device 1 comprises an ammonia mixed combustion engine 2, an intake passage 3, an exhaust passage 4, a main fuel supply device 5 and an auxiliary fuel supply device 6. Further, the engine device 1 comprises a selective reduction catalyst 7, an ammonia adsorption catalyst 8 and a control device 9. Moreover, the engine device 1 comprises a knock sensor 41, an intra-cylinder pressure sensor 42, an intra-cylinder temperature sensor 43, an intake air pressure sensor 44 and an intake air temperature sensor 45.

In this embodiment, the engine device 1 is an ammonia mixed combustion engine device especially, and the ammonia mixed combustion engine 2 is configured to be operated by an air-fuel mixture containing at least ammonia and hydrogen being combusted in a combustion chamber 21a of a cylinder 21 formed from a cylinder body 23 and a piston 24. In the engine device 1, the air-fuel mixture of a main fuel containing at least ammonia and hydrogen and air is supplied to the combustion chamber 21a of each cylinder 21 of the ammonia mixed combustion engine 2 and a supply of ammonia and hydrogen is controlled by the control device 9. In the engine device 1 of the present embodiment, at least one of the air-fuel mixture as a main fuel and a hydrocarbon-based fuel such as light oil as an auxiliary fuel is combusted in the combustion chamber 21a, and a supply of the auxiliary fuel is controlled by the control device 9.

The main fuel supply device 5 comprises an ammonia tank 11, an ammonia supply part 12, an ammonia decomposition device 13, a hydrogen tank 14 and a hydrogen supply part 15.

The ammonia tank 11 is filled with ammonia as the main fuel from the outside and stores it in the liquid form, and the ammonia supply part 12 is structured to have a pump or the like which is connected to the ammonia tank 11 and is controlled by the control device 9 to introduce ammonia from the ammonia tank 11 to supply the ammonia fuel to an ammonia injection part 35 of the ammonia mixed combustion engine 2 in the liquid or gaseous form.

The ammonia decomposition device 13 introduces ammonia from the ammonia tank 11, decomposes and reforms it to generate a hydrogen fuel, and stores hydrogen in the hydrogen tank 14 in the gaseous form. The hydrogen supply part 15 is structured to have a pump or the like which is connected to the hydrogen tank 14 and is controlled by the control device 9 to introduce hydrogen from the hydrogen tank 14 to supply the hydrogen fuel in the gaseous form to the hydrogen injection part 36 of the ammonia mixed combustion engine 2.

The auxiliary fuel supply device 6 comprises an auxiliary fuel tank 16 and an auxiliary fuel supply part 17. The auxiliary fuel tank 16 stores the hydrocarbon-based fuel such as light oil as the auxiliary fuel in the liquid form, and the auxiliary fuel supply part 17 is structured to have a pump or the like which is connected to the auxiliary fuel tank 16, is controlled by the control device 9 to introduce the auxiliary fuel from the auxiliary fuel tank 16 to supply the auxiliary fuel in the liquid form to the auxiliary fuel injection part 26 of the ammonia mixed combustion engine 2.

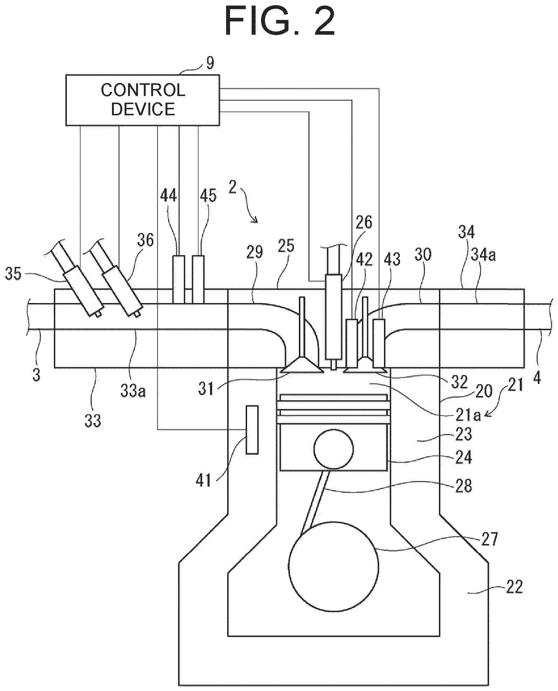

The ammonia mixed combustion engine 2 is a four-stroke engine, for example, and is structured to comprise a plurality of cylinders 21 and a crankcase 22 (see FIG. 2) in a cylinder block 20. In FIG. 1, while four cylinders 21 are shown, the number of cylinders 21 is not limited to four. As shown in FIG. 2, the cylinder 21 is composed of the cylinder body 23, the piston 24 and a cylinder head 25.

The cylinder body 23 is cylindrically formed in the cylinder block 20, and the piston 24 is slidably contained in the cylinder body 23, for example. The cylinder head 25 is attached to the upper side of the cylinder body 23, and the combustion chamber 21a is formed within the cylinder body 23 and the cylinder head 25. In the cylinder head 25, the auxiliary fuel injection part 26 which injects the auxiliary fuel to the combustion chamber 21a is provided.

For example, the auxiliary fuel injection part 26 is composed of a device such as a micro-pilot type injector which injects the auxiliary fuel in a small amount. In the auxiliary fuel injection part 26, the injection timing, the amount injected, the injection pressure, the injection frequency and the like of the auxiliary fuel are controlled by the control device 9. When the air-fuel mixture of the main fuel and air supplied to the combustion chamber 21a is compressed by the piston 24 heading toward the top dead center, causing a rise in temperature and pressure, the auxiliary fuel injection part 26 injects the hydrocarbon-based auxiliary fuel in the liquid form to the air-fuel mixture in the combustion chamber 21a to ignite and combust the air-fuel mixture. Namely, the auxiliary fuel supply device 6 and the auxiliary fuel injection part 26 function as an ignition device to ignite the air-fuel mixture in the combustion chamber 21a.

Each cylinder body 23 of the plurality of cylinders 21 communicates with the crankcase 22, and a crankshaft 27 is rotatably supported by a shaft to the crankcase 22. The piston 24 of each cylinder 21 is coupled to the crankshaft 27 via a connecting rod 28, and a reciprocating motion of the piston 24 is converted into a rotational motion of the crankshaft 27 via the connecting rod 28.

The cylinder head 25 has an intake port 29 and an exhaust port 30 communicating with the combustion chamber 21a of the cylinder body 23, and comprises an intake valve 31 and an exhaust valve 32 respectively opening and closing the intake port 29 and the exhaust port 30 with respect to the combustion chamber 21a.

The intake port 29 is connected to the intake passage 3 and introduces air supplied from the intake passage 3 to the combustion chamber 21a, and the exhaust port 30 is connected to the exhaust passage 4 and exhausts the exhaust gas generated in the combustion chamber 21a to the exhaust passage 4. When the intake valve 31 is opened, the air-fuel mixture of the main fuel and air can be taken to the combustion chamber 21a via the intake port 29 while when the exhaust valve 32 is opened, the exhaust gas generated in the combustion chamber 21a can be exhausted via the exhaust port 30.

The intake passage 3 is connected to the plurality of cylinders 21 of the ammonia mixed combustion engine 2 and supplies compressed and cooled air to each cylinder 21. The air-fuel mixture of air supplied from the intake passage 3 and the main fuel supplied from the main fuel supply device 5 is supplied from the intake passage 3 to the combustion chamber 21a of each cylinder 21. For example, the intake passage 3 is connected to the ammonia mixed combustion engine 2 via an intake manifold 33. The intake manifold 33 has branch flow paths 33a which branch into the plurality of cylinders 21, and each branch flow path 33a is connected to each intake port 29.

Meanwhile, in the intake passage 3, the branch flow path 33a, the intake port 29 or the cylinder head 25, the ammonia injection part 35 to supply the ammonia fuel as the main fuel and the hydrogen injection part 36 to supply the hydrogen fuel are provided from the main fuel supply device 5 toward each combustion chamber 21a.

**In** the ammonia injection part 35 and the hydrogen injection part 36, the amount injected, the injection timing and the like of the ammonia fuel and the hydrogen fuel are controlled by the control device 9, which controls the air excess ratio of the air-fuel mixture supplied to the combustion chamber 21a. The ammonia injection part 35 and the hydrogen injection part 36 may be composed of an admission valve, an injector and the like which are provided in each combustion chamber 21a correspondingly and inject the ammonia or hydrogen fuel.

Meanwhile, although in FIG. 2, an example that the ammonia injection part 35 and the hydrogen injection part 36 are provided in the intake manifold 33, inject the ammonia fuel and the hydrogen fuel to the branch flow path 33a to supply ammonia fuel and the hydrogen fuel to the combustion chamber 21a via the intake port 29 has been shown, the present invention is not limited to this example. Alternatively, the ammonia injection part 35 and the hydrogen injection part 36 may be provided in the intake passage 3, inject the ammonia fuel and the hydrogen fuel to the intake passage 3 to supply them to the combustion chamber 21a via the intake passage 3 and the intake port 29, or may be provided in the cylinder body 23 and the cylinder head 25, and directly inject and supply the ammonia fuel and the hydrogen fuel to the combustion chamber 21a.

The exhaust passage 4 is connected to the plurality of cylinders 21 of the ammonia mixed combustion engine 2, and flows and exhausts the exhaust gas generated in each cylinder 21. For example, the exhaust passage 4 is connected to the ammonia mixed combustion engine 2 via an exhaust manifold 34. The exhaust manifold 34 has branch flow paths 34a which branch into the plurality of cylinders 21, and each branch flow path 34a is connected to each exhaust port 30.

The exhaust passage 4 is connected to the selective reduction catalyst 7 and the ammonia adsorption catalyst 8 on the lower stream side of the exhaust direction to treat the exhaust gas flowing through the exhaust passage 4. The selective reduction catalyst 7 and the ammonia adsorption catalyst 8 are arranged through the exhaust passage 4 in series.

The selective reduction catalyst 7 is provided in the exhaust passage 4, and selectively reduces nitrogen oxides contained in the exhaust gas flowing through the exhaust passage 4 by a reducing agent such as urea water to purify ammonia and nitrogen oxides in the exhaust gas. On the upper stream side than the selective reduction catalyst 7 in the exhaust direction, a reducing agent supply part 7a to supply the reducing agent toward the selective reduction catalyst 7 is provided in the exhaust passage 4. In the reducing agent supply part 7a, the amount of the supplied reducing agent is controlled by the control device 9.

For example, the selective reduction catalyst 7 reacts and reduces ammonia and nitrogen oxides with one-to-one ratio (proportion) of concentration or number of moles, and the reducing agent supply part 7a is controlled by the control device 9 to supply the reducing agent so that the one-to-one concentration or number of moles of ammonia and nitrogen oxides introduced to the selective reduction catalyst 7 along with the exhaust gas is achieved.

The ammonia adsorption catalyst 8 is provided in the exhaust passage 4 on the upper stream side than the selective reduction catalyst 7 in the exhaust direction, and adsorbs ammonia contained in the exhaust gas flowing through the exhaust passage 4 to purify ammonia in the exhaust gas. That is to say, the ammonia adsorption catalyst 8 adsorbs ammonia to reduce the concentration and/or the number of moles of ammonia introduced by the exhaust gas into the selective reduction catalyst 7.

For example, the ammonia adsorption catalyst 8 may be composed of activated carbon, zeolites, Prussian blue, MOF (referred to as porous metal complex) or PCP (referred to as porous coordination polymer) and the like as an ammonia adsorbing material. Alternatively, in addition to the ammonia adsorbing function, the ammonia adsorption catalyst 8 may be composed of Fe ion-exchange zeolites, Cu ion-exchange zeolites and the like as a material which also reacts with nitrogen oxides.

The control device 9 is a computer such as an ECU (Engine Control Unit) to control the operation of the ammonia mixed combustion engine 2, comprises CPU, ROM, RAM, etc., and is configured to control the respective parts of the ammonia mixed combustion engine 2. The control device 9 may store various programs for controlling the ammonia mixed combustion engine 2, and read and execute the programs to control the ammonia mixed combustion engine 2.

The knock sensor 41 is for detecting knocking of the ammonia mixed combustion engine 2 and is provided in the cylinder block 20, for example. The knock sensor 41 is connected to the control device 9 and send the detection results to the control device 9.

The intra-cylinder pressure sensor 42 is for detecting the pressure within the cylinder 21 (within the combustion chamber 21a) and is provided in the cylinder head 25, for example. The intra-cylinder pressure sensor 42 is connected to the control device 9 and sends the detection results to the control device 9.

The intra-cylinder temperature sensor 43 is for detecting the temperature within the cylinder 21 (within the combustion chamber 21a) and is provided in the cylinder head 25, for example. The intra-cylinder temperature sensor 43 is connected to the control device 9 and sends the detection results to the control device 9.

The intake air pressure sensor 44 is for detecting the pressure of intake air to the ammonia mixed combustion engine 2 and is provided in the intake manifold 33, for example. The intake air pressure sensor 44 is connected to the control device 9 and sends the detection results to the control device 9. Meanwhile, although in this embodiment, an example that the intake air pressure sensor 44 detects the pressure of air-fuel mixture of low GHG fuel and air as intake air is detected has been explained, the present invention is not limited to this example, and the intake air pressure sensor 44 may detect the pressure of low GHG fuel or air as intake air.

The intake air temperature sensor 45 is for detecting the temperature of intake air to the ammonia mixed combustion engine 2 and is provided in the intake manifold 33, for example. The intake air temperature sensor 45 is connected to the control device 9 and sends the detection results to the control device 9. Meanwhile, although in this embodiment, an example that the intake air temperature sensor 45 detects the temperature of air-fuel mixture of low GHG fuel and air as intake air has been explained, the present invention is not limited to this example, and the intake air temperature sensor 45 may detect the temperature of low GHG fuel or air as intake air.

Meanwhile, although in FIG. 2, an example that the engine device 1 comprises the knock sensor 41, the intra-cylinder pressure sensor 42, the intra-cylinder temperature sensor 43, the intake air pressure sensor 44 and the intake air temperature sensor 45 has been shown, the present invention is not limited to this example, and the engine device 1 may comprise at least one sensor among these sensors.

Next, control over the supply of the main fuel composed of ammonia and hydrogen and the auxiliary fuel of the hydrocarbon-based fuel such as light oil in the engine device 1 will be explained.

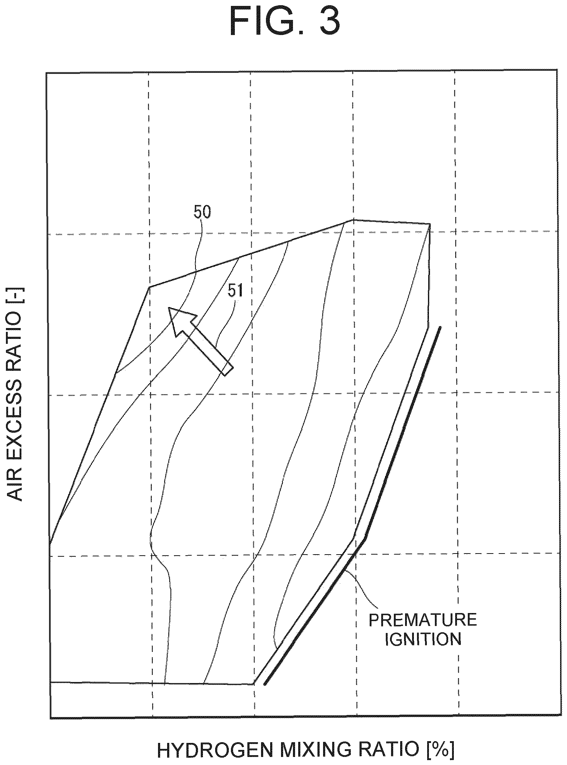

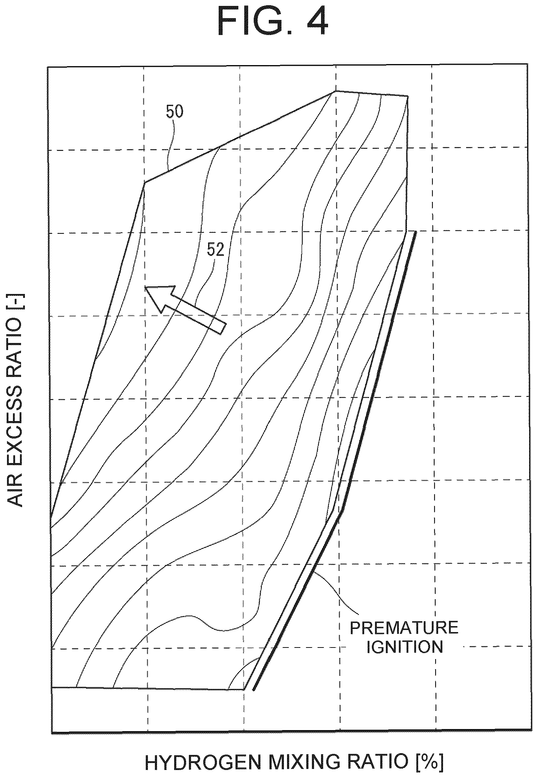

In FIG. 3-FIG. 4, the hydrogen mixed ratio (hydrogen mixed proportion) of the main fuel composed of ammonia and hydrogen supplied to the combustion chamber 21a is indicated in the axis of abscissa, and the air excess ratio of the air-fuel mixture supplied to the combustion chamber 21a with respect to the main fuel is indicated in the axis of ordinate. In FIG. 3, with respect to the relationship between the hydrogen mixed ratio and the air excess ratio, a stable region 50 in which the ammonia mixed combustion engine 2 can be stably operated is shown while the amount of nitrogen oxides such as dinitrogen monoxide (N₂O) contained in the exhaust gas in the stable region 50 is shown on a map, and dinitrogen monoxide increases toward the direction indicated with an outline arrow 51. In FIG. 4, with respect to the relationship between the hydrogen mixed ratio and the air excess ratio, the stable region 50 in which the ammonia mixed combustion engine 2 can be stably operated while the ignition timing which stably combusts the air-fuel mixture in a range of the stable region 50 is shown on a map, and the ignition timing is accelerated toward the direction indicated with an outline arrow 52.

As shown in FIG. 3, when the hydrogen mixed ratio is increased and the air excess ratio is decreased, nitrogen oxides such as dinitrogen monoxide in the exhaust gas is lowered; however, due to an excess increase in the hydrogen mixed ratio and an excess reduction in the air excess ratio, premature ignition is likely to occur because of a deviation from the stable region 50. Similarly, as shown in FIG. 4, when the hydrogen mixed ratio is increased and the air excess ratio is reduced, the ignition timing which stably combusts the air-fuel mixture is slowed down; however, due to an excess increase in the hydrogen mixed ratio and an excess reduction in the air excess ratio, premature ignition is likely to occur because of a deviation from the stable region 50.

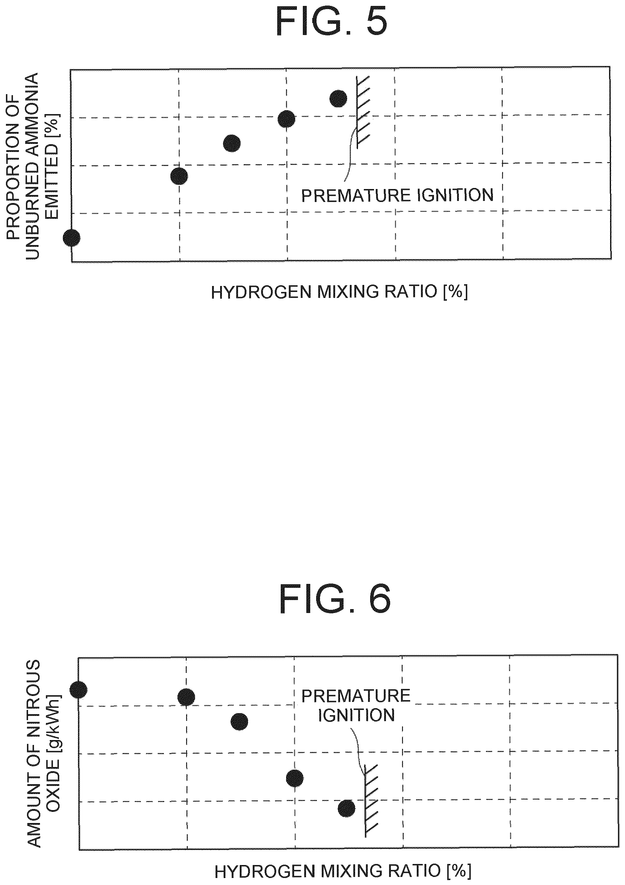

In addition, in FIG. 5, the hydrogen mixed ratio (hydrogen mixed proportion) of the main fuel composed of ammonia and hydrogen supplied to the combustion chamber 21a is indicated in the axis of abscissa, and the proportion of unburned ammonia contained in the exhaust gas and ammonia supplied to the combustion chamber 21a is indicated in the axis of ordinate. In FIG. 6, the hydrogen mixed ratio (hydrogen mixed proportion) of the main fuel composed of ammonia and hydrogen supplied to the combustion chamber 21a is indicated in the axis of abscissa, and the amount of nitrogen oxides such as dinitrogen monoxide (N₂O) contained in the exhaust gas is indicated in the axis of ordinate. As shown in FIG. 5 and FIG. 6, in the engine device 1, when the hydrogen mixed proportion is increased to a predetermined value or more, premature ignition is likely to occur.

For this reason, based on properties of the air-fuel mixture as a main fuel composed of ammonia and hydrogen as described above, and in accordance with a state of air-fuel mixture in the combustion chamber 21a, the the control device 9 controls an ignition device composed of the auxiliary fuel supply device 6 and the auxiliary fuel injection part 26 to inject the auxiliary fuel to the air-fuel mixture in the combustion chamber 21a at an ignition timing to stably combust the air-fuel mixture so that the air-fuel mixture is ignited and combusted. Here, the ignition timing to stably combust the air-fuel mixture is such a timing that when the piston 24 heads to the top dead center, the ignition device composed of the auxiliary fuel supply device 6 and the auxiliary fuel injection part 26 should ignite the air-fuel mixture before the air-fuel mixture whose temperature and pressure have been raised in the combustion chamber 21a reaches a predetermined spontaneous ignition temperature and a predetermined spontaneous ignition pressure causing spontaneous ignition.

For example, in the engine device 1, as shown in FIG. 4, with respect to the relationship between the hydrogen mixed ratio and the air excess ratio of the air-fuel mixture, the ignition timing in which the air-fuel mixture can be stably combusted is preset, and a map and an equation in which the set ignition timing can be acquired as appropriate has been stored as ignition timing information in the control device 9. And the control device 9 controls ignition of the air-fuel mixture by the ignition device based on ignition timing information. In particular, the control device 9 monitors the hydrogen mixed ratio and the air excess ratio of the air-fuel mixture, and uses the map and the equation of ignition timing information as input parameters expressing the current hydrogen mixed ratio and air excess ratio to acquire the ignition timing of the air-fuel mixture to be ignited, and controls the ignition device based on the ignition timing to ignite the air-fuel mixture.

Meanwhile, when the ammonia mixed combustion engine 2 is preliminarily and experimentally operated, it is beneficial for the engine device 1 to acquire various data on the ignition timing of the air-fuel mixture with respect to various data on the hydrogen mixed ratio and the air excess ratio of the air-fuel mixture so as to previously create and store a map showing the ignition timing in which the air-fuel mixture can be stably combusted in a range of the stable region 50 with respect to the relationship between the hydrogen mixed ratio and the air excess ratio of the air-fuel mixture. Alternatively, when the ammonia mixed combustion engine 2 is actually operated, the engine device 1 may acquire and accumulate various data on the ignition timing with respect to various data on the hydrogen mixed ratio and the air excess ratio of the air-fuel mixture so as to create and store a map showing the ignition timing capable of stably combusting the air-fuel mixture in a range of the stable region 50 with respect to the relationship of the hydrogen mixed ratio and the air excess ratio of the air-fuel mixture.

Alternatively, instead of ignition timing information described above, in the engine device 1, with respect to the relationship between the hydrogen mixed ratio and the air excess ratio of the air-fuel mixture, at least one injection parameter of the injection timing, the amount injected, the injection pressure and the injection frequency of the auxiliary fuel in which the air-fuel mixture can be stably combusted has been preset, and a map and an equation in which the set injection parameter can be acquired as appropriate has been stored in the control device 9 as auxiliary fuel injection information. Then, the control device 9 controls ignition of the air-fuel mixture by the ignition device based on auxiliary fuel injection information. In particular, the control device 9 monitors the hydrogen mixed ratio and the air excess ratio of the air-fuel mixture, and uses the map and the equation of auxiliary fuel injection information as the input parameters expressing the current hydrogen mixed ratio and air excess ratio so as to acquire at least one injection parameter of the injection timing, the amount injected, the injection pressure and the injection frequency of the auxiliary fuel to be applied to ignition of the air-fuel mixture, and based on such an injection parameter, ignites the air-fuel mixture by controlling the ignition device.

Meanwhile, when the ammonia mixed combustion engine 2 is preliminarily and experimentally operated, it is beneficial for the engine device 1 to acquire various data on injection parameters such as the injection timing, the amount injected, the injection pressure and the injection frequency of the auxiliary fuel with respect to various data on the hydrogen mixed ratio and the air excess ratio of the air-fuel mixture so as to previously create and store a map showing the injection parameters such as the injection timing, the amount injected, the injection pressure and the injection frequency of the auxiliary fuel that the air-fuel mixture can be stably combusted in a range of the stable region 50 with respect to the relationship between the hydrogen mixed ratio and the air excess ratio of the air-fuel mixture. Alternatively, when the ammonia mixed combustion engine 2 is actually operated, the engine device 1 may acquire and accumulate various data on injection parameters such as the injection timing, the amount injected, the injection pressure and the injection frequency of the auxiliary fuel with respect to various data on the hydrogen mixed ratio and the air excess ratio of the air-fuel mixture so as to create and store a map showing the injection parameters such as the injection timing, the amount injected, the injection pressure and the injection frequency of the auxiliary fuel that the air-fuel mixture can be stably combusted in a range of the stable region 50 with respect to the relationship between the hydrogen mixed ratio and the air excess ratio of the air-fuel mixture.

In addition, when performing the control of the ignition device based on ignition timing information or auxiliary fuel injection information as described above, the control device 9 decides the occurrence or prediction of premature ignition in the ammonia mixed combustion engine 2 to determine premature ignition, and/or decides the occurrence or prediction of the deteriorated exhaust gas properties in the ammonia mixed combustion engine 2 to determine the deteriorated exhaust gas properties.

For example, based on the detection result from at least one sensor of the knock sensor 41, the intra-cylinder pressure sensor 42, the intra-cylinder temperature sensor 43, the intake air pressure sensor 44 and the intake air temperature sensor 45, the control device 9 decides the occurrence or prediction of premature ignition in the ammonia mixed combustion engine 2, and/or the occurrence or prediction of the deteriorated exhaust gas properties. Specifically, when an abnormal knocking is detected by the knock sensor 41, the control device 9 may decide that the premature ignition has occurred. Further, when abnormal raised pressure and raised temperature in the combustion chamber 21a are detected by the intra-cylinder pressure sensor 42 and the intra-cylinder temperature sensor 43, the control device 9 may decide that the premature ignition has occurred. Moreover, when abnormal raised pressure and raised temperature of intake air supplied to the combustion chamber 21a is detected by the intake air pressure sensor 44 and the intake air temperature sensor 45, the control device 9 may decide that the premature ignition is predicted.

Then, based on the detection result from at least one sensor of the knock sensor 41, the intra-cylinder pressure sensor 42, the intra-cylinder temperature sensor 43, the intake air pressure sensor 44 and the intake air temperature sensor 45, the control device 9 performs avoidance control over the premature ignition and/or the deteriorated exhaust gas properties in the ammonia mixed combustion engine 2.

Normally, when the occurrence or prediction of the premature ignition and/or the deteriorated exhaust gas properties is not decided in the ammonia mixed combustion engine 2, in order to allow the air-fuel mixture to be stably combusted, the control device 9 controls the supply of the main fuel in a preset hydrogen mixed proportion and ammonia mixed proportion for a predetermined target output in the ammonia mixed combustion engine 2.

On the other hand, when the occurrence or prediction of the premature ignition is decided based on the detection result from each sensor, for example, the control device 9 decreases the hydrogen mixed proportion and/or increases the ammonia mixed proportion in the main fuel to control the output of the ammonia mixed combustion engine 2 to achieve a predetermined target output. Alternatively, when the occurrence or prediction of the deteriorated exhaust gas properties is decided based on the detection result from each sensor, the control device 9 decreases the hydrogen mixed proportion and/or increases the ammonia mixed proportion in the main fuel to control the output of the ammonia mixed combustion engine 2 to achieve a predetermined target output.

As described above, according to the present invention, the engine device 1 which is an ammonia mixed combustion engine device operated by the air-fuel mixture of at least ammonia and hydrogen being combusted in the combustion chamber 21a, supplies ammonia and hydrogen to the combustion chamber 21a to create the air-fuel mixture, compresses the air-fuel mixture in the combustion chamber 21a to raise its temperature and pressure, and ignites, in accordance with a state of the air-fuel mixture in the combustion chamber 21a, the air-fuel mixture in the combustion chamber 21a by means of the ignition device composed of the auxiliary fuel supply device 6 and the auxiliary fuel injection part 26.

For example, the ignition device ignites the air-fuel mixture by injecting the auxiliary fuel which is the hydrocarbon-based fuel such as light oil. Meanwhile, in the above embodiment, although an example that the ignition device is composed of the auxiliary fuel supply device 6 and the auxiliary fuel injection part 26 has been explained, the present invention is not limited to this example, and the ignition device may be structured to comprise a sparking plug so as to ignite the air-fuel mixture by discharging electricity from the sparking plug.

Therefore, according to the engine device 1 of the present invention, by controlling ignition in accordance with a state of the air-fuel mixture containing ammonia and hydrogen, the air-fuel mixture can be ignited by using the ignition device before the air-fuel mixture reaches high temperatures and high pressures causing spontaneous ignition. For this reason, while ability to ignite the air-fuel mixture containing ammonia and hydrogen and its slow combustion speed are improved, the premature ignition and the knocking can be inhibited, and while the air-fuel mixture is stably combusted, the exhaust gas properties can be enhanced.

In addition, the engine device 1 of the present invention comprises the control device 9 which has ignition timing information indicating the predefined ignition timing with respect to the relationship between the ammonia and hydrogen mixed proportion and the air excess ratio of the air-fuel mixture, and the control device 9 controls ignition of the air-fuel mixture by the ignition device based on ignition timing information.

Because of this, the engine device 1 can control the ignition timing in accordance with a state of the air-fuel mixture containing ammonia and hydrogen, reliably decide the timing before the air-fuel mixture reaches high temperatures and high pressures causing spontaneous ignition, and ignite the air-fuel mixture by using the ignition device.

Moreover, when the ignition device is configured to ignite the air-fuel mixture by injecting the auxiliary fuel which is the hydrocarbon-based fuel such as light oil, the engine device 1 of the present invention comprises the control device 9 which has auxiliary fuel injection information indicating at least one of the predefined injection timing, amount injected, injection pressure and injection frequency of the hydrocarbon-based fuel with respect to the relationship between the ammonia and hydrogen mixed proportion and the air excess ratio of the air-fuel mixture, and the control device 9 controls ignition of the air-fuel mixture by the ignition device based on auxiliary fuel injection information.

Thanks to this, the engine device 1 can control the injection timing, the amount injected, the injection pressure, the injection frequency and the like of the hydrocarbon-based fuel in accordance with a state of the air-fuel mixture containing ammonia and hydrogen, and further improve the stable combustion and the exhaust gas properties of the air-fuel mixture.

In addition, the engine device 1 of the present invention comprises at least one sensor of the knock sensor 41 of detecting the knocking in the ammonia mixed combustion engine 2, the intra-cylinder pressure sensor 42 of detecting the pressure in the combustion chamber 21a of the ammonia mixed combustion engine 2, the intra-cylinder temperature sensor 43 of detecting the temperature in the combustion chamber 21a of the ammonia mixed combustion engine 2, the intake air pressure sensor 44 of detecting the pressure of intake air to the ammonia mixed combustion engine 2 and the intake air temperature sensor 45 of detecting the temperature of intake air to the ammonia mixed combustion engine 2, and based on the detection result from the at least one sensor, the control device 9 determines the premature ignition of the ammonia mixed combustion engine 2 or alternatively, determines the deteriorated exhaust gas properties.

As a result of this, the engine device 1 can reliably determine the premature ignition and the deteriorated exhaust gas properties in the ammonia mixed combustion engine 2 so as to allow the premature ignition and the deteriorated exhaust gas properties to be addressed.

Furthermore, when the control device 9 determines the premature ignition in the ammonia mixed combustion engine 2, the engine device 1 of the present invention decreases the hydrogen mixed proportion and/or increases the ammonia mixed proportion in the main fuel.

Thus, the engine device 1 can control the output of the ammonia mixed combustion engine 2 to achieve a predetermined target output and can inhibit the premature ignition in the ammonia mixed combustion engine 2 more reliably.

In addition, when the control device 9 determines the deteriorated exhaust gas properties in the ammonia mixed combustion engine 2, the engine device 1 of the present invention decreases the hydrogen mixed proportion and/or increases the ammonia mixed proportion in the main fuel.

For this reason, the engine device 1 can control the output of the ammonia mixed combustion engine 2 to achieve a predetermined target output and can inhibit the deteriorated exhaust gas properties in the ammonia mixed combustion engine 2 more reliably.

Also, the engine device 1 of the present invention reforms ammonia to create the hydrogen fuel by the ammonia decomposition device 13 and the like.

Because of this, possession of a large amount of hydrogen as a fuel is not necessary for the engine device 1, and hydrogen created by reforming ammonia can be used as the main fuel.

Meanwhile, although in the above embodiment, an example that ammonia is introduced from the ammonia tank 11 by the ammonia decomposition device 13 to decompose and reform it to create the hydrogen fuel, and hydrogen is stored in the hydrogen tank 14 in the gaseous form has been explained, the present invention is not limited to this example; and hydrogen may be filled from the outside in the gaseous form to be stored in the hydrogen tank 14.

In addition, although in the above embodiment, the engine device 1 comprises the control device 9 having auxiliary fuel injection information indicating at least one of the predefined injection timing, amount injected, injection pressure and injection frequency of the hydrocarbon-based fuel, and the control device 9 controls ignition by the ignition device based on auxiliary fuel injection information has been explained, the present invention is not limited to this example.

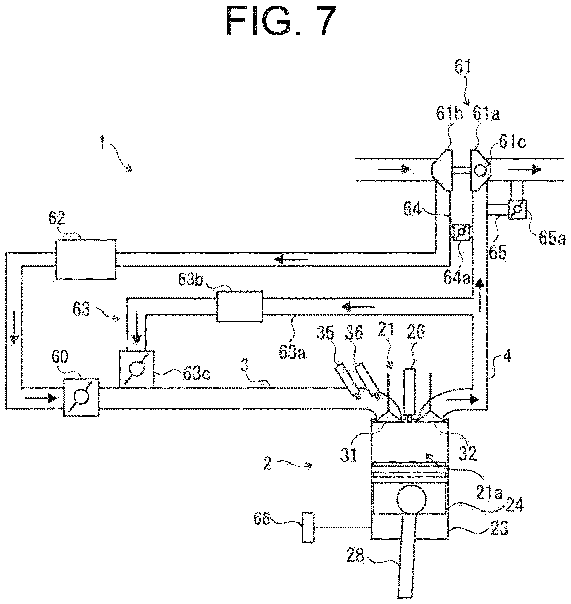

In another example, as shown in FIG. 7, in addition to the structure of the above embodiment, the engine device 1 comprises an intake throttle 60, a turbocharger 61, an intercooler 62 and a recirculation device 63 (EGR device). Further, the engine device 1 comprises an intake bypass passage 64 and a waste gate 65. Moreover, the engine device 1 comprises a rotation speed sensor 66 to detect the rotation speed of the ammonia mixed combustion engine 2.

Then, the engine device 1 comprises the control device 9 having intake system information indicating at least one of the EGR ratio of the recirculation device 63, the timing of opening and closing a valve for the intake valve 31 and the exhaust valve 32 (intake and exhaust valves), the amount of air bypassed from the intake passage 3 to the exhaust passage 4 in the intake bypass passage 64 (i.e., the amount of intake air bypassed), the degree of opening of the waste gate 65 in the turbocharger 61, and the degree of opening of a variable nozzle 61c in the turbocharger 61, and the control device 9 is configured to control, based on intake system information, at least one of the EGR ratio, the timing of opening and closing the intake and exhaust valves, the amount of intake air bypassed, the degree of opening of the waste gate 65 and the degree of opening of the variable nozzle 61c to control the air excess ratio of the air-fuel mixture.

Particularly, in the engine device 1, the turbocharger 61, the intercooler 62 and the intake throttle 60 are provided in the order from the upper stream side of the the the intake passage 3 in the intake direction.

The turbocharger 61 has a turbine 61a arranged in the exhaust passage 4 and a compressor 61b arranged in the exhaust passage 4, and in the the turbine 61a, the variable nozzle 61c is provided to regulate the passage area for the exhaust gas flowing through the turbine 61a. The turbocharger 61 rotates the turbine 61a with the exhaust gas flowing through the exhaust passage 4 and drives the compressor 61b with rotation power of the turbine 61a to compress air flowing through the intake passage 3.

The recirculation device 63 comprises a recirculation passage 63a, a recirculation cooler 63b and a recirculation valve 63c. The recirculation passage 63a is connected to the exhaust passage 4 on the upper stream side of the exhaust direction than the turbocharger 61 (turbine 61a) and is connected to the intake passage 3 on the lower stream side of the intake direction than the intercooler 62. By means of the recirculation cooler 63b, the recirculation device 63 cools and recirculates the exhaust gas flowing through the exhaust passage 4 on the upper stream side of the exhaust direction than the turbocharger 61, and supplies it to the intake passage 3 on the lower stream side of the intake direction than the intercooler 62. The recirculation device 63 regulates the degree of opening of the recirculation valve 63c by the control device 9, and regulates the flow rate of the recirculated exhaust gas flowing into the intake passage 3 to regulate the amount of oxygen in air flowing through the intake passage 3.

In addition, in the engine device 1, in order to bypass the lower stream side than the turbocharger 61 in the intake direction of the intake passage 3 and to bypass the upper stream side than the turbocharger 61 in the exhaust direction of the exhaust passage 4, the intake bypass passage 64 is provided, and in the intake bypass passage 64, an intake bypass valve 64a is provided to regulate the amount of intake air bypassed. In the engine device 1, to bypass the upper stream side and the lower stream side than the turbocharger 61 in the exhaust direction of the exhaust passage 4, the waste gate 65 is provided, and in the waste gate 65, a waste gate valve 65a is provided to regulate the amount of exhaust gas bypassed.

And the engine device 1 controls, by the control device 9, the recirculation valve 63c in the recirculation device 63 and reduces, by the recirculation device 63, the EGR ratio which is the proportion of the exhaust gas recirculated from the exhaust passage 4 to the intake passage 3 to increase the amount of air in intake air to increase the air excess ratio, or increases the EGR ratio to reduce the amount of air in intake air to decrease the air excess ratio. This optimizes the air excess ratio with respect to the hydrogen mixed ratio to enhance combustion stability in the combustion chamber 21a.

Alternatively, the engine device 1 controls the intake valve 31 by the control device 9 to advance the timing of opening the valve or retard the timing of closing the valve for the intake valve 31 to increase the amount of air in intake air to increase the air excess ratio, or retard the timing of opening the valve or advance the timing of closing the valve for the intake valve 31 to decrease the amount of air in intake air to reduce the air excess ratio. This optimizes the air excess ratio with respect to the hydrogen mixed ratio to enhance combustion stability in the combustion chamber 21a.

Alternatively, the engine device 1 controls the intake bypass valve 64a by the control device 9 to decrease the amount of bypassed intake air to the exhaust passage 4 to increase the amount of air in intake air to increase the air excess ratio, or increase the amount of bypassed intake air to reduce the amount of air in intake air to decrease the air excess ratio. This optimizes the air excess ratio with respect to the hydrogen mixed ratio to enhance combustion stability in the combustion chamber 21a.

Alternatively, the engine device 1 controls the waste gate valve 65a by the control device 9 to decrease the degree of opening of the waste gate 65 to increase the amount of air in intake air to increase the air excess ratio, or to increase the degree of opening of the waste gate 65 to decrease the amount of air in intake air to reduce the air excess ratio. This optimizes the air excess ratio with respect to the hydrogen mixed ratio to enhance combustion stability in the combustion chamber 21a.

Alternatively, the engine device 1 controls the variable nozzle 61c by the control device 9 to decrease the degree of opening of the variable nozzle 61c and reduce the passage area in the turbine 61a of the turbocharger 61 to increase the amount of compressed air in the turbocharger 61 to increase the amount of air in intake air to increase the air excess ratio, or to increase the degree of opening of the variable nozzle 61c and increase the passage area in the turbine 61a of the turbocharger 61 to decrease the amount of compressed air in the turbocharger 61 to reduce the amount of air in intake air to decrease the air excess ratio. This optimizes the air excess ratio with respect to the hydrogen mixed ratio to enhance combustion stability in the combustion chamber 21a.

**In** this way, according to another example, the engine device 1 controls at least one of the EGR ratio, the timing opening and closing the valve for the intake and exhaust valves, the amount of bypassed intake air, the degree of opening of the waste gate 65 and the degree of opening of the variable nozzle 61c to control the air excess ratio of the air-fuel mixture to fall in a range of the stable region 50 in FIG. 3 with respect to a predetermined hydrogen mixed ratio.

**In** yet another example, by the control device 9 and based on the detection result from at least one sensor of the rotation speed sensor 66 and the intra-cylinder pressure sensor 42, the engine device 1 determines the occurrence of unstable combustion in the ammonia mixed combustion engine 2 or alternatively, predicts the occurrence of unstable combustion in the ammonia mixed combustion engine 2.

For example, in accordance with the difference between the target rotation speed of the ammonia mixed combustion engine 2 and the actually measured rotation speed detected by the rotation speed sensor 66, and in a case where the difference is over a predetermined threshold of difference, the control device 9 decides that unstable combustion occurs. In addition, in accordance with the difference between the target pressure in the cylinder 21 (in the combustion chamber 21a) and the actually measured pressure detected by the intra-cylinder pressure sensor 42, and in a case where the difference is over a predetermined threshold of difference, the control device 9 decides that unstable combustion occurs.

Further, in a case where the engine device 1 decides that unstable combustion occurs in the ammonia mixed combustion engine 2, or predicts that unstable combustion occurs in the ammonia mixed combustion engine 2, it controls, by the control device 9, the hydrogen mixed ratio in the air-fuel mixture to be increased (or decreased) and controls the ammonia mixed ratio to be decreased (or increased). At this moment, in order to regulate the output of the ammonia mixed combustion engine 2 to achieve a predetermined target output, and inhibit the occurrence of unstable combustion in the ammonia mixed combustion engine 2, the control device 9 regulates the hydrogen mixed ratio and the ammonia mixed ratio in the the air-fuel mixture.

Meanwhile, the present invention can be appropriately modified in a range that does not contradict the gist or concept of the invention that can be read throughout claims and the specification, and an engine device to which such modifications have been made is also included in the technical concept of the present invention.

### [Supplementary notes of the invention]

An outline of the invention extracted from the above-described embodiment will be described below as supplementary notes. Meanwhile, the structures and processing functions described in the following supplementary notes can be selected and arbitrarily combined.

### <Supplementary note 1>

An engine device of an ammonia mixed combustion engine operated by an air-fuel mixture of at least ammonia and hydrogen being combusted in a combustion chamber,
wherein the ammonia and the hydrogen are supplied to the combustion chamber to create the air-fuel mixture,
the air-fuel mixture is compressed in the combustion chamber to raise a temperature and pressure of the air-fuel mixture, and
in accordance with a state of the air-fuel mixture in the combustion chamber, the air-fuel mixture in the combustion chamber is ignited by an ignition device.

### <Supplementary note 2>

The engine device according to supplementary note 1, wherein the ignition device ignites the air-fuel mixture by injecting a hydrocarbon-based fuel or by discharging electricity from a sparking plug.

### <Supplementary note 3>

The engine device according to supplementary note 1 or 2, comprising a control device which has ignition timing information indicating a predefined ignition timing with respect to a relationship between a proportion of the mixed ammonia and hydrogen and an air excess ratio of the air-fuel mixture,
wherein the control device controls ignition of the air-fuel mixture by the ignition device based on the ignition timing information.

### <Supplementary note 4>

The engine device according to supplementary note 1, wherein the ignition device is configured to ignite the air-fuel mixture by injecting a hydrocarbon-based fuel,
the engine device comprises a control device which has auxiliary fuel injection information indicating at least one of a predefined injection timing, amount injected, injection pressure and injection frequency of the hydrocarbon-based fuel with respect to a relationship between a proportion of the mixed ammonia and hydrogen and an air excess ratio of the air-fuel mixture, and
the control device controls ignition by the ignition device based on the auxiliary fuel injection information.

### <Supplementary note 5>

The engine device according to any one of supplementary notes 1-4, comprising at least one sensor of a knock sensor of detecting knocking of the ammonia mixed combustion engine, an intra-cylinder pressure sensor of detecting a pressure in a combustion chamber of the ammonia mixed combustion engine, an intra-cylinder temperature sensor of detecting a temperature in the combustion chamber of the ammonia mixed combustion engine, an intake air pressure sensor of detecting a pressure of intake air to the ammonia mixed combustion engine, and an intake air temperature sensor of detecting a temperature of intake air to the ammonia mixed combustion engine,
wherein based on a detection result from the at least one sensor, premature ignition of the ammonia mixed combustion engine is determined, or deteriorated exhaust gas properties is determined.

### <Supplementary note 6>

The engine device according to supplementary note 5, wherein when premature ignition of the ammonia mixed combustion engine is determined, a proportion of the mixed hydrogen is decreased and/or a proportion of the mixed ammonia is increased.

### <Supplementary note 7>

The engine device according to supplementary note 5 or 6, wherein when deteriorated exhaust gas properties in the ammonia mixed combustion engine is determined, a proportion of the mixed hydrogen is decreased and/or a proportion of the mixed ammonia is increased.

### <Supplementary note 8>

The engine device according to any one of supplementary notes 1-7, wherein the ammonia is reformed to create the hydrogen.

### <Supplementary note 9>

The engine device according to supplementary note 1, comprising a control device which has intake system information indicating at least one of an EGR ratio, a timing of opening and closing intake and exhaust valves, an amount of bypassed intake air, a degree of opening of a turbocharger waste gate and a degree of opening of a turbocharger variable nozzle,
wherein the control device controls, based on the intake system information, at least one of the EGR ratio, the timing of opening and closing the intake and exhaust valves, the amount of bypassed intake air, the degree of opening of the turbocharger waste gate and the degree of opening of the turbocharger variable nozzle to control an air excess ratio of the air-fuel mixture.

### <Supplementary note 10>

The engine device according to supplementary note 9, comprising at least one sensor of a rotation speed sensor of detecting a rotation speed of the ammonia mixed combustion engine, and an intra-cylinder pressure sensor of detecting a pressure in a combustion chamber of the ammonia mixed combustion engine,
wherein based on a detection result from the at least one sensor, an occurrence of unstable combustion in the ammonia mixed combustion engine is determined, or an occurrence of unstable combustion in the ammonia mixed combustion engine is predicted.

### <Supplementary note 11>

The engine device according to supplementary note 10, wherein when the occurrence of unstable combustion in the ammonia mixed combustion engine is determined, or when the occurrence of unstable combustion in the ammonia mixed combustion engine is predicted, a ratio of the mixed hydrogen is increased while a ratio of the mixed ammonia is decreased in the air-fuel mixture.

### REFERENCE SIGNS LIST

1 engine device
2 ammonia mixed combustion engine
3 intake passage
4 exhaust passage
5 main fuel supply device
6 auxiliary fuel supply device
9 control device
11 ammonia tank
12 ammonia supply part
13 ammonia decomposition device
14 hydrogen tank
15 hydrogen supply part
16 auxiliary fuel tank
17 auxiliary fuel supply part
20 cylinder block
21 cylinder
21a combustion chamber
22 crankcase
23 cylinder body
24 piston
25 cylinder head
26 auxiliary fuel injection part
35 ammonia injection part
36 hydrogen injection part
41 knock sensor
42 intra-cylinder pressure sensor
43 intra-cylinder temperature sensor
44 intake air pressure sensor
45 intake air temperature sensor
60 intake throttle
61 turbocharger
61a turbine
61b compressor
61c variable nozzle
62 intercooler
63 recirculation device
63a recirculation passage
63b recirculation cooler
63c recirculation valve
64 intake bypass passage
64a intake bypass valve
65 waste gate
65a waste gate valve
66 rotation speed sensor

## Claims

1. An engine device of an ammonia mixed combustion engine operated by an air-fuel mixture of at least ammonia and hydrogen being combusted in a combustion chamber,
wherein the ammonia and the hydrogen are supplied to the combustion chamber to create the air-fuel mixture,
the air-fuel mixture is compressed in the combustion chamber to raise a temperature and pressure of the air-fuel mixture, and
in accordance with a state of the air-fuel mixture in the combustion chamber, the air-fuel mixture in the combustion chamber is ignited by an ignition device.

2. The engine device according to claim 1, wherein the ignition device ignites the air-fuel mixture by injecting a hydrocarbon-based fuel or by discharging electricity from a sparking plug.

3. The engine device according to claim 1, comprising a control device which has ignition timing information indicating a predefined ignition timing with respect to a relationship between a proportion of the mixed ammonia and hydrogen and an air excess ratio of the air-fuel mixture,
wherein the control device controls ignition of the air-fuel mixture by the ignition device based on the ignition timing information.

4. The engine device according to claim 1, wherein the ignition device ignites the air-fuel mixture by injecting a hydrocarbon-based fuel,
the engine device comprises a control device which has auxiliary fuel injection information indicating at least one of a predefined injection timing, amount injected, injection pressure and injection frequency of the hydrocarbon-based fuel with respect to a relationship between a proportion of the mixed ammonia and hydrogen and an air excess ratio of the air-fuel mixture, and
the control device controls ignition by the ignition device based on the auxiliary fuel injection information.

5. The engine device according to claim 1, comprising at least one sensor of a knock sensor of detecting knocking of the ammonia mixed combustion engine, an intra-cylinder pressure sensor of detecting a pressure in the combustion chamber of the ammonia mixed combustion engine, an intra-cylinder temperature sensor of detecting a temperature in the combustion chamber of the ammonia mixed combustion engine, an intake air pressure sensor of detecting a pressure of intake air to the ammonia mixed combustion engine, and an intake air temperature sensor of detecting a temperature of intake air to the ammonia mixed combustion engine,
wherein based on a detection result from the at least one sensor, premature ignition of the ammonia mixed combustion engine is determined, or deteriorated exhaust gas properties is determined.

6. The engine device according to claim 5, wherein when premature ignition of the ammonia mixed combustion engine is determined, a proportion of the mixed hydrogen is decreased and/or a proportion of the mixed ammonia is increased.

7. The engine device according to claim 5, wherein when deteriorated exhaust gas properties in the ammonia mixed combustion engine is determined, a proportion of the mixed hydrogen is decreased and/or a proportion of the mixed ammonia is increased.

8. The engine device according to claim 1, wherein the ammonia is reformed to create the hydrogen.

9. The engine device according to claim 1, comprising a control device which has intake system information indicating at least one of an EGR ratio, a timing of opening and closing intake and exhaust valves, an amount of bypassed intake air, a degree of opening of a turbocharger waste gate and a degree of opening of a turbocharger variable nozzle,
wherein the control device controls, based on the intake system information, at least one of the EGR ratio, the timing of opening and closing the intake and exhaust valves, the amount of bypassed intake air, the degree of opening of the turbocharger waste gate and the degree of opening of the turbocharger variable nozzle to control an air excess ratio of the air-fuel mixture.

10. The engine device according to claim 9, comprising at least one sensor of a rotation speed sensor of detecting a rotation speed of the ammonia mixed combustion engine, and an intra-cylinder pressure sensor of detecting a pressure in a combustion chamber of the ammonia mixed combustion engine,
wherein based on a detection result from the at least one sensor, an occurrence of unstable combustion in the ammonia mixed combustion engine is determined, or an occurrence of unstable combustion in the ammonia mixed combustion engine is predicted.

11. The engine device according to claim 10, wherein when the occurrence of unstable combustion in the ammonia mixed combustion engine is determined, or when the occurrence of unstable combustion in the ammonia mixed combustion engine is predicted, a ratio of the mixed hydrogen is increased while a ratio of the mixed ammonia is decreased in the air-fuel mixture.
